# EUROPEAN PATENT APPLICATION

(11) **EP 4 779 351 A1**
(43) Date of publication of application: **22.07.2026**
(21) Application number: 23944528.1
(22) Date of filing: 13.09.2023
(51) Int. Cl.: G01S 7/03, B60R 13/04, H01Q 1/42

(54) **RADIO WAVE TRANSMISSION MEMBER, AUTOMOBILE COMPONENT, EMBLEM, AND OBJECT DETECTION STRUCTURE**

(71) Applicant: Resonac Corporation, Tokyo 105-7325 (JP)
(72) Inventor: MORIHARA, Masumi, Tagawa-shi Fukuoka 8250005 (JP)
(74) Representative: Hoffmann Eitle
(86) International application number: PCT/JP2023/033457
(87) International publication number: WO 2025/057350

(57) **Abstract**

A radio wave transmissive member, including an outer member, an inner member, and a metal layer that is transmissive to a radio wave, the metal layer being disposed between the outer member and the inner member, and at least one of the outer member or the inner member having a light diffusion feature.

## Description

### Technical Field

The present disclosure relates to a radio wave transmissive member, an automobile component, an emblem and an object detection structure.

### Background Art

There have been remarkable improvements in safety systems for automobiles of recent years. For example, automatic collision-avoidance systems have become standard equipment for automobiles.

An automatic collision-avoidance system is a system that functions to brake automatically based on the image data, which is obtained from a car camera, and the information of relative distance between a car body and an object, which is obtained by a radio-wave transceiver, such as a millimeter-wave transceiver.

The radio-wave transceiver of an automatic collision-avoidance system is preferably disposed at the center of a front of a car body. Generally, an emblem is disposed at the center of a front of a car body. Therefore, the radio-wave transceiver is preferably disposed behind an emblem of a car body.

Emblems for automobiles generally have, on a substrate made of resin or the like, a metal layer for expressing a metallic sheen. For example, Patent Document 1 and Patent Document 2 disclose a structure having a metallic layer that is formed on a substrate by silver mirror reaction, as an emblem that has a metallic sheen and is transmissive to radio waves.
Patent Document 1: Japanese Patent Application Laid-Open No. 2003-019765
Patent Document 2: Japanese Patent Application Laid-Open No. 2019-177311

### Summary of the Invention

### Problem to be Solved by the Invention

Appearance of automobiles is an important element thereof, and an emblem is expected to serve as a means of expressing aesthetic features of the automobiles.

In light of the foregoing, the present disclosure aims to provide a radio wave transmissive member, an automobile component, an emblem, and an object detection structure, which have transmissivity to radio waves and have an appearance with an excellent design.

### Means for Solving the Problem

The means for solving the forging problem includes the following embodiments.
<1> A radio wave transmissive member, including an outer member, an inner member, and a metal layer that is transmissive to a radio wave,
   the metal layer being disposed between the outer member and the inner member, and
   at least one of the outer member or the inner member having a light diffusion feature.
<2> The radio wave transmissive member according to <1>, wherein each of the outer member and the inner member includes a resin.
<3> The radio wave transmissive member according to <1> or <2>, wherein at least one of the outer member or the inner member comprises light diffusion particles.
<4> The radio wave transmissive member according to any one of <1> to <3>, wherein the metal layer is transmissive to visible light.
<5> The radio wave transmissive member according to any one of <1> to <4>, being for transmission of a radio wave with a frequency of from 20 GHz to 300 GHz.
<6> An automobile component, including the radio wave transmissive member according to any one of <1> to <5>.
<7> An emblem, including the radio wave transmissive member according to any one of <1> to <5>.
<8> An object detection structure, including:
   a radio wave transmissive member comprising an outer member, a metal layer that is transmissive to a radio wave, and an inner member;
   a device that radiates the radio wave toward the radio wave transmissive member from a rear side of the radio wave transmissive member; and
   a light source that radiates light toward the radio wave transmissive member from a lateral side of the radio wave transmissive member.

### Effect of the Invention

According to the present disclosure, a radio wave transmissive member, an automobile component, an emblem, and an object detection structure, which have transmissivity to radio waves and have an appearance with an excellent design.

### Brief Explanation of the Drawings

FIG. 1 is a schematic sectional view illustrating an exemplary configuration of the radio wave transmissive member.
FIG. 2 is a schematic plan view illustrating an exemplary configuration of the radio wave transmissive member.
FIG. 3 is a schematic view illustrating exemplary automobile components including the radio wave transmissive member.
FIG. 4 is a schematic view illustrating exemplary automobile components including the radio wave transmissive member.
FIG. 5 is a schematic view illustrating exemplary automobile components including the radio wave transmissive member.

### Embodiments for Implementing the Invention

Embodiments for carrying out the present disclosure will now be described in detail. However, the present disclosure is in no way limited to the following embodiments.

In the following embodiments, constituent elements (including element steps and the like) of the embodiments are not essential, unless otherwise specified. Likewise, numerical values and ranges thereof are not intended to restrict the invention.

In the present disclosure, any numerical range described using the expression "from * to" represents a range in which numerical values described before and after the "to" are included in the range as a minimum value and a maximum value, respectively.

In a numerical range described in stages, in the present disclosure, an upper limit value or a lower limit value described in one numerical range may be replaced with an upper limit value or a lower limit value in another numerical range described in stages. Further, in a numerical range described in the present disclosure, the upper limit value or the lower limit value in the numerical range may be replaced with a value shown in the Examples.

In the present disclosure, each component may include plural kinds of substances corresponding to the component. In a case in which plural kinds of substances corresponding to each component are present in a composition, the content ratio or content of each component refers to the total content ratio or content of the plural kinds of substances present in the composition, unless otherwise specified.

In the present disclosure, particles corresponding to each component may include plural kinds of particles.

In the present disclosure, the term "layer" or "film" includes, when a region where a layer or a film is present is observed, a case in which a layer or a film is formed at a portion of the region, in addition to a case in which a layer or a film is formed at an entire region.

In the present disclosure, when an embodiment is explained by referring to a drawing, the configuration of the embodiment is not limited to a configuration illustrated in the drawing. Further, the size of the components is illustrated in the drawing in a conceptual manner, and the relative relationship in size among the components are not limited thereto.

### <Radio Wave Transmissive Member>

The radio wave transmissive member of the present disclosure is a radio wave transmissive member, including an outer member, an inner member, and a metal layer that is transmissive to a radio wave,
the metal layer being disposed between the outer member and the inner member, and
at least one of the outer member or the inner member having a light diffusion feature.

The radio wave transmissive member of the present disclosure has, between the outer member and the inner member, the metal layer that is transmissive to radio waves. By providing the metal layer that is transmissive to radio waves between the outer member and the inner member, it is possible to impart a metallic sheen to the radio wave transmissive member without interrupting the transmission of radio waves.

Further, since at least one of the outer member or the inner member has a light diffusion feature, it is possible to cause the radio wave transmissive member to emit light, thereby enabling the radio wave transmissive member to demonstrate various kinds of expressions using light.

Further, since at least one of the outer member or the inner member has a light diffusion feature, it is possible to cause the radio wave transmissive member to emit light to a sufficient degree, even when the radio wave transmissive member is irradiated with light from a direction other than the direction of incidence of radio waves. Therefore, it is possible to locate a light source at a position that does not compete with a transceiver for radio waves (for example, at a lateral side of the radio wave transmissive member).

In the present disclosure, the "outer member" refers to a member that is disposed at a side opposite to a side facing a device that radiates radio waves toward the radio wave transmissive member, and the "inner member" refers to a member that is disposed at a side facing a device that radiates radio waves toward the radio wave transmissive member.

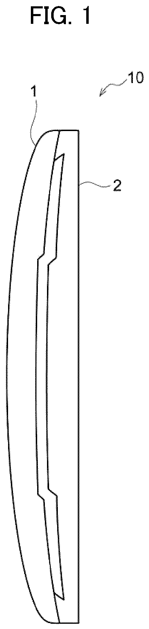

FIG. 1 is a schematic sectional view illustrating an exemplary configuration of the radio wave transmissive member.

The radio wave transmissive member 10, shown in FIG. 1, has a configuration in which the outer member 1 and the inner member 2 are disposed so as to face each other.

In the radio wave transmissive member 10, the metal layer (not shown), being disposed between the outer member 1 and the inner member 2, is disposed at a surface of the outer member 1 that is facing the inner member 2, for example.

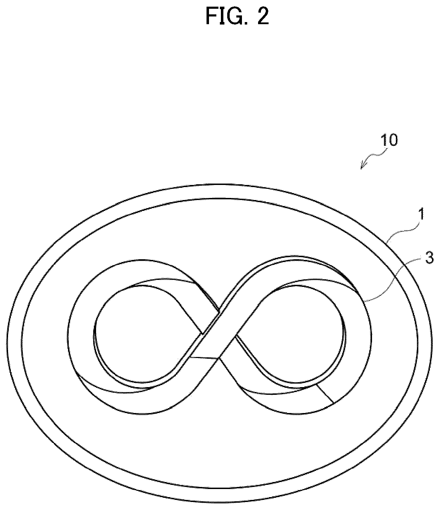

FIG. 2 is a schematic plan view illustrating an exemplary configuration of the radio wave transmissive member 10 being observed from a side of the outer member 1.

The radio wave transmissive member 10 shown in FIG. 2 has a pattern 3 of an arbitrary shape. In order to impart a metallic sheen to the pattern 3, it is possible to provide a metal layer that is transmissive to radio waves at a region corresponding to the pattern 3 between the outer member 1 and the inner member 2.

The pattern 3 may have a stereoscopic shape. For example, by providing the pattern 3 with a concave shape at a surface of the outer member 1 facing the inner member 2, it is possible to impart a convex stereoscopic effect to the pattern 3 viewed from a side of the outer member 1.

### (Outer Member and Inner Member)

From the viewpoint of a balance between the strength and the radio wave transmissivity of the radio wave transmissive member, the outer member and the inner member are preferably a layer including a resin, respectively.

Examples of the resin that may be included in the outer member and the inner member include thermosetting resins, thermoplastic resins and synthetic rubbers.

Examples of the thermoplastic resins include polyethylene (PE), polypropylene (PP), polycarbonate (PC), polystyrene, polyvinyl chloride, vinyl polymer, polyester, polyamide, acrylonitrile-butadiene-styrene copolymer (ABS resin), (meth)acrylic resin, acrylonitrile-ethylene-propylene-diene-styrene copolymer (AES resin) and thermoplastic elastomers.

Examples of the thermosetting resins include silicone resin, urethane resin, melamine resin, epoxy resin, phenol resin and urea resin.

Example of the synthetic rubbers include ethylene-propylene-diene rubber (EPDM), acrylonitrile-butadiene rubber (NBR), isoprene rubber (IR), butadiene rubber (BR), styrenebutadiene rubber (SBR), chloroprene rubber (CR), silicone rubber and urethane rubber.

Among the foregoing resins, PC, PP, ABS resin, (meth)acrylic resin and AES resin are preferred, and PC, PP and ABS resin are more preferred.

PC is highly resistant to impact and heat, and is highly transparent. Further, PC is easy for processing, relatively light in weight, and durable. (Meth)acrylic resin is highly transparent and resistant to weather. AES resin is high in stiffness and highly resistant to weather.

When the outer member and the inner member include a resin, respectively, the outer member and the inner member may include a resin alone, or may include a resin and a component other than resin.

Examples of the component other than resin include inorganic particles, colorants, antistatics, and light diffusion particles as mentioned below.

When each of the outer member and the inner member independently includes a resin and a component other than resin, respectively, the content of a resin included in the outer layer or the inner member is preferably 60% by mass or more, more preferably 70% by mass or more, further preferably 80% by mass or more, particularly preferably 90% by mass or more. The upper limit of the content of a resin is not particularly limited, as long as it is less than 100% by mass.

At least one of the outer member or the inner member has a light diffusion feature.

Examples of the method for imparting a light diffusion feature to at least one of the outer member or the inner member include a method of including light diffusion particles therein, a method of forming a concave-convex pattern at a surface thereof, and the like.

The outer member or the inner member with a light diffusion feature may have the light diffusion feature either at an entire body thereof or at a portion thereof.

Among the foregoing methods, a method of including light diffusion particles is preferred from the viewpoint of productivity.

Examples of the light diffusion particles include resin particles such as acrylic resin particles, silicone resin particles, methyl methacrylate particles, styrene/methyl methacrylate particles and methyl methacrylate/butadiene/styrene particles; and inorganic particles such as titanium oxide particles, silica particles, zirconia particles, zinc oxide particles and alumina particles.

A single kind of light diffusion particles may be used alone, or two or more kinds thereof may be used in combination.

When the outer member or the inner member includes light diffusion particles, the content of light diffusion particles is not particularly limited. For example, the content of light diffusion particles may be from 3% by mass to 20% by mass with respect to the entire body of the outer member or the inner member.

### (Metal Layer)

The metal layer is disposed between the outer member and the inner member. The metal layer may be disposed at a surface of the outer member facing the inner member, or may be disposed at a surface of the inner member facing the outer member.

From the viewpoint of achieving a favorable metallic sheen, the metal layer is preferably disposed at a surface of the outer member facing the inner member.

The metal layer may be transmissive to visible light. When the metal layer is transmissive to visible light, it is possible to cause the radio wave transmissive member to emit light at a region at which the metal layer is disposed, due to transmission of visible light.

Examples of the metal layer that is transmissive to radio waves include a film including metal particles. When the metal layer includes metal particles, radio waves can pass through the spaces among the metal particles.

The metal layer may be a metal layer including silver particles. The metal layer including silver particles may be formed by a silver mirror reaction, for example.

Examples of the method for forming a metal layer by a silver mirror reaction include a method of causing, on a substrate, an ammoniacal silver nitrate aqueous solution and a reducing agent aqueous solution to contact each other. In this method, precipitation of silver particles is caused by an oxidation-reduction reaction, whereby a metal layer including silver particles is formed on the substrate.

When the metal layer is provided on the outer member or the inner member, the outer member or the inner member may be used as a substrate.

From the viewpoint of radio wave transmissivity, the thickness of the metal layer is preferably 1000 nm or less, more preferably 500 nm or less, further preferably 100 nm or less.

From the viewpoint of imparting a sufficient degree of metallic sheen to the radio wave transmissive member, the thickness of the metal layer is preferably 10 nm or more.

When the metal layer is provided on the outer member or the inner member, an undercoat layer may be provided between the metal layer and either the outer layer or the inner layer, in order to improve the adhesion between the metal layer and either the outer layer or the inner layer.

Further, a protection layer may be provided on the metal layer in order to protect the surface of the metal layer.

Examples of the undercoat layer or the protection layer include a layer including a resin, and examples of the resin include fluorine resin, polyester resin, epoxy resin, melamine resin, silicone resin, acrylic silicone resin, and acrylic urethane resin.

The thickness of the undercoat layer or the protection layer is preferably from 1 µm to 50 µm. When the thickness of the undercoat layer or the protection layer is from 1 µm to 50 µm, it is possible to sufficiently suppress the amount of attenuation of radio waves due to the undercoat layer or the protection layer.

The thickness of the radio wave transmissive member is not particularly limited, and may be determined depending on the configuration of the radio wave transmissive member, the wavelength of the radio wave that permeates the radio wave transmissive member, or the like.

For examples, the radio wave transmissive member may have a maximum thickness of from 2.1 mm to 36.0 mm, from 3.3 mm to 28.0 mm, or from 4.5 mm to 22.0 mm, in a thickness direction thereof.

In the present disclosure, the thickness of the radio wave transmissive member may be measured by a known method. For example, the thickness of the radio wave transmissive member may be measured by observing a cross section thereof, or may be measured using a microtome or the like.

The type of the radio waves for transmission by the radio wave transmissive member is not particularly limited, and may be millimeter waves, for example. In the present disclosure, the "millimeter wave" refers to a radio wave with a frequency of from 20 GHz to 300 GHz. The radio wave transmissive member of the present disclosure is especially useful for the purpose of reducing the amount of transmission attenuation of millimeter waves.

### <Automobile Component>

The automobile component of the present disclosure is an automobile component including the foregoing radio wave transmissive member.

The type of the automobile component is not particularly limited, and may be any kind of interior or exterior components for automobiles.

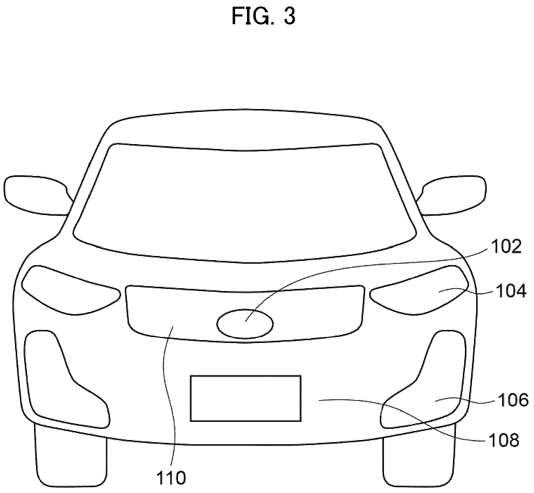

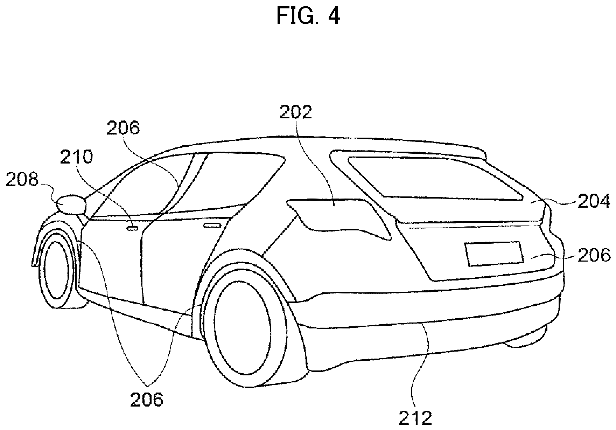

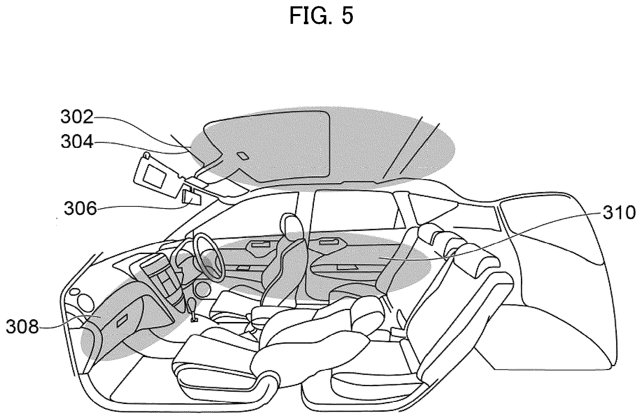

Examples of the automobile component include the components provided at a front portion of an automobile as illustrated in FIG. 3; the components provided at a side-to-rear portion of an automobile as illustrated in FIG. 4; and the components provided at an internal space of an automobile as illustrated in FIG. 5.

Specific examples of the automobile components include an emblem 102, a lamp 104, a garnish 106, a bumper 108 and grill 110, as illustrated in FIG. 3; a lamp 202, a back door 204, a garnish 206, an outer mirror 208, a door outer handle 210 and a bumper 212, as illustrated in FIG. 4; a room lamp 302, a roof garnish 304, a room mirror 306, an instrument panel garnish 308 and a door trim 310, as illustrated in FIG. 5.

The automobile components may have a sensing functionality, such as an obstacle sensor, a human-detecting sensor and a vital sensor.

### <Emblem>

The emblem of the present disclosure includes the foregoing radio wave transmissive member.

The emblem of the present disclosure has an ability to transmit radio waves. Therefore, for example, it is possible to maintain the transmitting-and-receiving performance of a radio wave transceiver in favorable conditions, even if the emblem is disposed at a front side of an automobile at which the radio wave transceiver is located.

The emblem of the present disclosure is disposed at a car body of an automobile such that the outer layer of the radio wave transmissive member is on the outside.

### <Object Detection Structure>

The object detection structure of the present disclosure includes:
a radio wave transmissive member including an outer member, a metal layer that is transmissive to a radio wave, and an inner member;
a device that radiates the radio wave toward the radio wave transmissive member from a rear side of the radio wave transmissive member; and
a light source that radiates light toward the radio wave transmissive member from a lateral side of the radio wave transmissive member.

The object detection structure of the present disclosure has a light source that radiates light toward the radio wave transmission member. Therefore, it is possible to cause the radio wave transmissive member to emit light at a desired portion thereof, thereby enabling the radio wave transmissive member to demonstrate various kinds of expressions using light.

Further, in the radio wave transmissive member of the present disclosure, the light source is located at a lateral side of the radio wave transmissive member. Therefore, it is possible to dispose the light source without competing with a device to emit radio waves, which is located at a rear side of the radio wave transmissive member.

In the present disclosure, the "rear side of the radio wave transmissive member" refers to a position corresponding to a rear side of the inner member when the radio wave transmissive member is observed from a side of the outer member.

In the present disclosure, the "lateral side of the radio wave transmissive member" refers to a position corresponding to a region out of the periphery of the radio wave transmissive member, when the radio wave transmissive member is observed from a side of the outer member.

The type of the light source used in the object detection structure is not particularly limited. From the viewpoint of safety and economy, the light source is preferably a light-emitting diode (LED).

The color of the light emitted from the light source, the blink pattern, and the like are not particularly limited, and may be determined depending on the desired effect to demonstrate.

The location of the light source is not particularly limited as long as it is at a lateral side of the radio wave transmissive member, and the light source may be disposed at a single location or two or more locations.

In the radio wave transmissive member used in the objection detection structure of the present disclosure, it is possible that at least one of the outer member or the inner member has a light diffusion feature (i.e., the radio wave transmissive member is the radio wave transmissive member of the present disclosure), or it is possible that neither the outer member nor the inner member has a light diffusion feature. From the viewpoint of causing the radio wave transmissive member to emit light in an efficient manner, at least one of the outer member or the inner member preferably has a light diffusion feature.

The preferred embodiments of the members that constitute the radio wave transmissive member are the same as the preferred embodiments of the members that constitute the foregoing radio wave transmissive member.

The objection detection structure of the present disclosure is suitably used for an automatic collision-avoidance system (preferably an automatic collision-avoidance system employing millimeter waves) of automobiles, for example.

## Claims

1. A radio wave transmissive member, comprising an outer member, an inner member, and a metal layer that is transmissive to a radio wave,
the metal layer being disposed between the outer member and the inner member, and
at least one of the outer member or the inner member having a light diffusion feature.

2. The radio wave transmissive member according to claim 1, wherein each of the outer member and the inner member comprises a resin.

3. The radio wave transmissive member according to claim 1, wherein at least one of the outer member or the inner member comprises light diffusion particles.

4. The radio wave transmissive member according to claim 1, wherein the metal layer is transmissive to visible light.

5. The radio wave transmissive member according to any one of claim 1 to claim 4, being for transmission of a radio wave with a frequency of from 20 GHz to 300 GHz.

6. An automobile component, comprising the radio wave transmissive member according to any one of claim 1 to claim 5.

7. An emblem, comprising the radio wave transmissive member according to any one of claim 1 to claim 5.

8. An object detection structure, comprising:
a radio wave transmissive member comprising an outer member, a metal layer that is transmissive to a radio wave, and an inner member;
a device that radiates the radio wave toward the radio wave transmissive member from a rear side of the radio wave transmissive member; and
a light source that radiates light toward the radio wave transmissive member from a lateral side of the radio wave transmissive member.
